# EUROPEAN PATENT SPECIFICATION

(11) **EP 3 038 411 B1**
(45) Date of publication and mention of the grant of the patent: **11.10.2023**
(21) Application number: 14200129.6
(22) Date of filing: 23.12.2014
(51) Int. Cl.: H04W 72/23, H04W 72/0453, H04W 74/00, H04W 84/04, H04W 84/12, H04W 88/06

(54) **Radio communication device and method for transmission resource allocation in a telecommunication network**
Funkkommunikationsgerät und Verfahren zur Übertragung von Ressourcenzuweisung in einem Telekommunikationsnetz
Appareil de radiocommunication et procédé d'attribution de ressources de transmission dans un réseau de télécommunication

(43) Date of publication of application: 29.06.2016
(73) Proprietor: IPCom GmbH & Co. KG, 82049 Pullach (DE)
(72) Inventor: Schmidt, Andreas, 38124 Braunschweig (DE); Luft, Achim, 38118 Braunschweig (DE); Hans, Martin, 31162 Bad Salzdetfurth (DE)
(74) Representative: Tomlinson, Edward James

(56) References cited:
- EP-A1- 2 757 850
- US-A1- 2014 126 504
- RAPEEPAT RATASUK ET AL: "License-exempt LTE deployment in heterogeneous network", WIRELESS COMMUNICATION SYSTEMS (ISWCS), 2012 INTERNATIONAL SYMPOSIUM ON, IEEE, 28 August 2012 (2012-08-28), pages 246-250, XP032263759, DOI: 10.1109/ISWCS.2012.6328367 ISBN: 978-1-4673-0761-1
- CUI QIMEI ET AL: "A unified protocol stack solution for LTE and WLAN in future mobile converged networks", IEEE WIRELESS COMMUNICATIONS, IEEE SERVICE CENTER, PISCATAWAY, NJ, US, vol. 21, no. 6, 1 December 2014 (2014-12-01), pages 24-33, XP011566776, ISSN: 1536-1284, DOI: 10.1109/MWC.2014.7000968 [retrieved on 2014-12-31]
- "3rd Generation Partnership Project; Technical Specification Group Radio Access Network; Study on Licensed-Assisted Access to Unlicensed Spectrum; (Release 13)", 3GPP DRAFT; 36889-011-CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 November 2014 (2014-11-27), XP050919782, Retrieved from the Internet: URL:http://www.3gpp.org/ftp/tsg_ran/WG1_RL 1/TSGR1_79/Docs/ [retrieved on 2014-11-27]

## Description

### TECHNICAL FIELD

The present invention is directed towards a radio communication device and a corresponding method for transmission resource allocation in a telecommunication system, especially in a wireless mobile telecommunication system. In particular, it relates to a combination of transmission technology being adapted to operate according to one of the IEEE 802.11 family of standards, commonly known as Wi-Fi or WLAN and technology adapted to operate in accordance with mobile communication standards such as the "Long Term Evolution", LTE for short, transmission technology (or its successor technology "LTE Advanced").

### BACKGROUND

Existing telecommunication technology relies on a transmission on available communication channels such as the licensed band spectrum. A further contribution of commonly known methods is the usage of further frequency bands such as the unlicensed spectrum band. Hence, already applied LTE standards are to be enhanced towards a telecommunication standard commonly known as LTE-U, which now also takes advantage of unlicensed frequency bands. Commonly known user equipment typically operate according to a variety of standards, such as the WLAN and the LTE standard. While the number of available communication channels is limited due to physical restrictions the number of communicating end devices increases over the last years, which leads to interference issues as several end devices need to share common transmission resources.

An extension of LTE Advanced to the unlicensed spectrum can provide better coverage and capacity than Wi-Fi deployed by network operators, while allowing for seamless flow of data between licensed and unlicensed spectrum through a single core network. This allows operators to augment the capacity of their networks by utilization of the unlicensed spectrum more efficiently while also providing the tightest possible interworking between the licensed and unlicensed bands. This results in higher data rates, seamless use of both licensed and unlicensed bands, higher reliability, better mobility and further more.

The utilisation of LTE in an unlicensed spectrum, such as 5 GHz, is in the following referred to as LTE in unlicensed bands (LTE-U) but also known as licensed-assisted-access (LAA). Hence, throughout this application LTE may also be referred to as LTE-U. LTE-U and Wi-Fi networks should enjoy equal access to the unlicensed band's radio resources (e.g., time and frequency resources), which results in a reduction of bandwidth in the unlicensed band in case many networks are operating in the same band. When demand exceeds the network capacity, each network must be able to access an equal share.

In the current standardisation discussions, an operation of LTE in the unlicensed band in parallel to the current usage of the licensed bands is planned. The LTE usage in these unlicensed bands must be accomplished in parallel to other operated services, such as WLAN, and the resource management should be fair regarding the consideration of further network operators and private users.

For minimal interference with other equipment, a form of carrier selection is performed according to state of the art. Therefore before occupying a specific frequency band, the activities on potentially usable bands are detected and a channel is selected, which is either not in use or the level of use is low. In general WLAN comprises two different approaches for carrier detection as follows.

Firstly, there is carrier selection which is the detection of energy per channel broadcast by local transmitters, in many cases together with the evaluation of WLAN beacons and their SSID (Service Set Identifier), the so-called access point name, together with their modes of operation such as "infrastructure" or "ad-hoc".

Secondly, there is a so-called RTS/CTS (Request-To-Send/Clear-To-Send) procedure at the MAC (Medium Access Control) level. In this approach time intervals are considered in which the sender has to wait after a channel is recognized as being free or available.

Presently there is no such functionality in LTE devices as the resource management typically takes places in the network and is communicated to the terminal. Future approaches of LTE-U may address an infrastructure mode in which the LTE base station itself is an LTE-U base station or is in direct communication with such an LTE-U base station and controls it. The application of the LTE-U family of standards for a direct device-to-device communication, also referred to as "proximity services", ProSE for short, or ad-hoc mode is also covered by the present invention. Future approaches of LTE-U may also comprise traffic load balancing methods between legacy LTE operating in the licensed bands and LTE-U operating in the unlicensed bands.

In case larger data traffic occurs LTE-U will at least from time to time use additional carriers, e.g. by means of carrier aggregation or dual connectivity, and add these to an already existing carrier being in use, such as the commonly known LTE in the licensed bands. Therefore, the mobile device typically holds a permanent connection to a LTE base station eNB, which allows for exchanging control information between the mobile device and the LTE base station.

In general, the co-existence of LTE and WLAN standards is known. Nowadays cell phones typically comprise functionality being capable of LTE and concurrent WLAN transmission. However, the problem of interference and resulting noise issues is not satisfactorily solved.

US 2014/0187282 A1 teaches a wireless communication system, being arranged such that a first communication schedule of a first transceiver is coordinated in accordance with a second communication schedule of a second transceiver to avoid concurrent transmissions. Furthermore it is taught that existing solutions include scheduling and coordination between radio access technologies to ensure that the radio access technologies are never transmitting and/or receiving a signal at the same time. This approach includes preventing all concurrent transmissions and receptions and all situations where one radio access technology is transmitting and another radio access technology is concurrently receiving. However, the suggested subject matter of this application is that schedules have to be controlled, which requires additional effort as an additional controller is required for performing the respective coordination of schedules.

US 2006/0215601 A1 discloses a method of communicating between devices of a personal area network using a wireless medium that is shared with a wireless local area network, wherein WLAN devices communicate using protocols of the WLAN and the personal area network devices communicate using personal area network protocols. Hence, a personal area network coordinator is proposed that is simultaneously connected to its personal area network devices and a base station, e.g. a WLAN access point. For communicating in the personal area network that shares the same wireless medium as the WLAN a reservation of the wireless medium is made between the personal area network controller and personal area network devices to enable interference free transmission within the personal area network.

US 2014/0112175 A1 discloses an apparatus for a wireless telecommunication device, the apparatus comprising at least one processor for determining the existence of an interference condition in an overlapping service area and furthermore scheduling data communication for interference minimization.

US 2013/0343236 A1 discloses a technology for reducing interference in collocated radios.

EP 1 693 992 A1 discloses an overlay using distributed coordination function protocol for providing a priority access.

WO 2013/179095 A1 shows a cellular access node collecting interference information in a plurality of channels in the unlicensed spectrum and the usage of the collected information to update an allocation of the channels among at least two different access points.

EP 2 696 530 A2 provides a method for communication in a wireless telecommunication system. The method comprises adaptively designating, by a network element following a frame-based communication protocol for use as secondary component carrier in a carrier aggregation scheme, at least a portion of radio resources on an unlicensed band.

US 2014/187287 A1 discloses a method for determining intermodulation caused by two transceivers that are concurrently transmitting for instance in different frequency bands. The first transceiver may inform the second transceiver with a "look-ahead signal" about imminent transmissions. Alternatively, the first transceiver may inform the second transceiver about its transmission schedule, e.g. regular TX and RX opportunities. The second transceiver adopts its own transmission behavior. Neither RTS nor CTS are disclosed in relation the subject matter of the present invention.

WO 2011/123531 A1 discloses a coexistence manager implemented in a wireless device allows operation of two active RATs (in different frequency bands). When the first radio access technology ,e.g. LTE, is not scheduled for communication during an UL time slot the second radio access technology, e.g., WLAN, may be used. Neither RTS nor CTS are mentioned in the context of LTE.

US 2013/272260 A1 discloses a coexistence interface between the two baseband processors: at a first point in time LTE operates as known, then a time interval is selected in the user equipment to be used exclusively for WLAN and the base station is asked to refrain from scheduling LTE data transmissions from the user equipment to the base station in said time interval. For this the user equipment indicates "no data is pending" as a part of its buffer status report BSR, even if there is data waiting to be transmitted. The selected time interval can be used exclusively for WLAN transmissions. The focus here lies on a modified buffer status report BSR mechanism in order to mitigate interference between LTE and WLAN operating in different frequency bands.

Neither RTS nor CTS are mentioned. Merely a way for the access point is disclosed to protect its own transmissions from interruption. Since the access point is in between transmitting devices it does not send an RTS to a client and then have a client send a CTS.

US 2013/016635 A1 discloses the mitigation of interference between radio access technologies RATs on a multi-radio access technology device. Transmissions of the individual radio access technologies, operating in different frequency bands, are timed in a manner that reduces interference. Available transmission opportunities for a first radio access technology are determined based on a timing configuration of a second radio access technology. The traffic of the first radio access technology may be re-scheduled according to the activities of the second radio access technology and current interference conditions. Neither RTS nor CTS are applied as it is done in the context of the subject matter of the present invention.

The prior art does not provide an efficient and stable approach to interference reduction of LTE in the unlicensed bands, LTE-U. The state of the art lacks further coordination of the heterogeneous systems among each other, as the involved technology approaches related to WLAN and LTE-U cause mutual interference leading to disadvantages e.g. by increasing the noise ratio of both approaches. Furthermore both approaches, WLAN and LTE, are typically implemented as separate standards which are to be combined without re-using capacities provided by each of the two standards for the respectively other standard. Hence, according to the state of the art separate WLAN technology and separate LTE technology is combined without providing an overall integration towards one single transmission technology. Hence, functionality is implemented redundantly which can as well be used and shared by both technologies.

It is therefore an object of the present invention to provide an improved method for minimizing interference and for allocation of transmission resources, especially in a wireless telecommunication scenario.

### SUMMARY

This object is solved by a radio communication device according to claim 1 and by a corresponding method according to claim 12.

Preferred embodiments are described in the dependent claims.

### DRAWINGS

The invention will now be described merely by way of illustration with reference to the accompanying drawings in which:
- Figure 1: shows a mobile terminal for interference minimization in a wireless telecommunication network;
- Figure 2: shows a telecommunication system for interference minimization in a wireless telecommunication network;
- Figure 3: shows a further telecommunication system for interference minimization in a wireless telecommunication network;
- Figure 4: shows a further telecommunication system for interference minimization in a wireless telecommunication network;
- Figure 5: shows a further telecommunication system for interference minimization in a wireless telecommunication network; and
- Figure 6: shows a further telecommunication protocol for interference minimization in a wireless telecommunication network.

### DETAILED DESCRIPTION

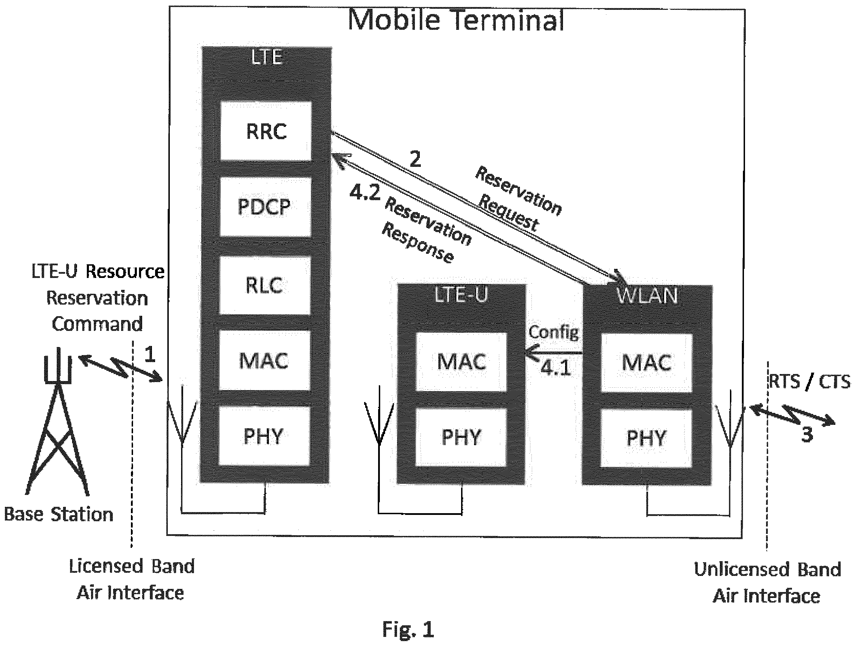

Figure 1 shows a mobile terminal, also referred to as user equipment, for interference minimization in a wireless telecommunication network. On the left hand side a base station is shown which communicates with the mobile terminal being arranged in the middle of the present figure 1. The mobile terminal comprises several protocol stacks. The boxes being indicated inside the mobile terminal represent a LTE module, a LTE-U module and a WLAN module. As the present figure 1 only provides a schematic overview,it may also be possible to provide a different hardware configuration of the mobile terminal. As already indicated above single components of WLAN and LTE technology can be shared and may therefore be provided only once. The indicated RF-device can be provided as a single RF module or as multiple RF modules. The arrows indicate a signal flow between the respective components. In general figure 1 depicts the interaction between the WLAN module and the LTE-U module among others. There are two options for accomplishing the RTS/CTS procedure according the IEEE 802.11 family of standards.

Firstly, the RTS/CTS procedure is triggered in a first device by a WLAN module, in case such a WLAN is provided. This option is depicted in the present figure 1. It might be the case that a handover of a command from the LTE base station and its LTE module to the WLAN module is required. This also applies to single parameters which need to be handed over. This complies with step 2 "Reservation Request" as it is shown in figure 1. These parameters could for instance be the timing/ scheduling-information, being received by a network device in step 1. With this information the LTE base station coordinates the transmission and/or the reception of data. The steps 4.1 and 4.2 are accomplished immediately after performing the RTS/CTS procedure according to the WLAN standard in step 3. In step 4.1 the WLAN module configures the LTE-U module, such that the LTE-U module is able to send data in the reserved time slot without any collisions. It may furthermore be the case that a periodicity needs to be indicated or respectively configured, in case the WLAN module attempts to reserve resources for the use of the LTE-U module by means of the RTS/CTS procedure periodically. In step 4.2 the WLAN module informs the LTE module about the outcome of the reservation attempts, such as the forwarding of the "duration" parameter from the CTS acknowledgement. Hence, the scheduler in the LTE-U base station can be respectively configured on the network side, wherein a close coupling between the LTE base station and the LTE-U base station is required.

Secondly, the RTS/CTS procedure is performed by the LTE-U module itself, which is not depicted in the present figure 1. For performing the RTS/CTS procedure in the LTE-U module, for instance according to the specifications being received by the LTE base station, an enhancement of the LTE-U protocol stack towards WLAN functionality is required. This provides the advantage that the sequence and synchronization of WLAN signals according to WLAN standard, such as IEEE 802.1 1a/b/g/n/..., are considered and the respective protocol information is set according to these standard specifications. In one arrangement the RTS/CTS procedure is solely performed by the LTE-U module (i.e. instead of the WLAN module). Alternatively, the RTS/CTS procedure is performed by the LTE-U module and the WLAN module in a joint effort (for instance in an alternating manner, i.e. the procedure is performed for a first set of RTS/CTS commands by the LTE-U module and for a second set of RTS/CTS commands by the WLAN module and so on).

One of the involved parameters for the blocking of resources by means of the RTS/CTS procedure is the "duration" measured in micro seconds, which can be encoded by 2 bytes. This value is normally determined independently by the sending WLAN device in dependence upon the data load, for instance the buffer level of a sender memory. In case of larger data amounts a fragmentation is possible. In this case several intervals need to be reserved one after another and several packets need to be sent one by one. The maximum period of time of an interval of time may be 0,065536 seconds. The replying WLAN device sends a CTS message comprising a duration, the value of the duration being typically the same of the one being comprised in the RTS message or less.

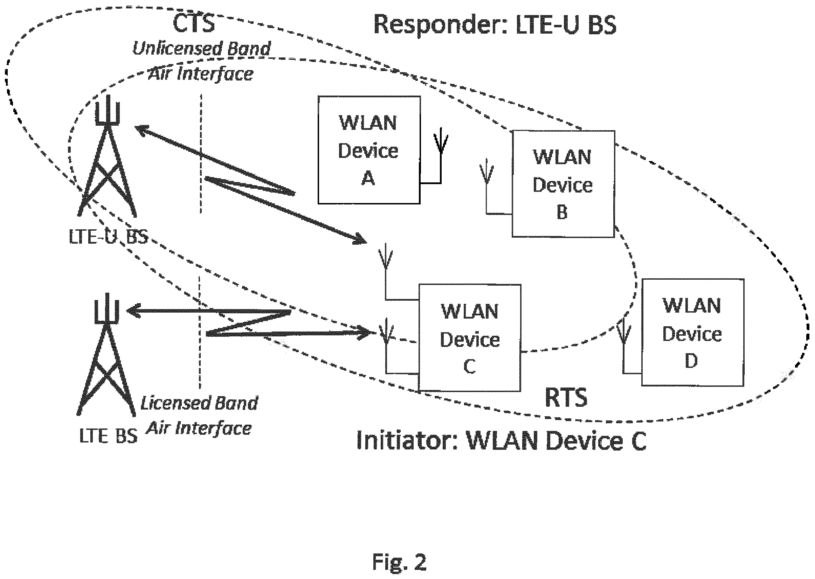

Figure 2 shows a telecommunication system for interference minimization in a wireless telecommunication network. A network device, in this case the mobile user equipment being referred to as WLAN device C, requests the allocation of a time slot RTS according to the WLAN standard, which is also received and considered by all further WLAN devices. The receiving part of the RTS message, in this case the LTE-U base station, responds according to the WLAN technology with a Clear-to-Send message CTS. This response message CTS is also received and respected by all neighboring WLAN stations. Hence, a period of time is defined which is reserved for the transmission of WLAN information by means of the requesting network device, in this case the mobile user equipment referred to as WLAN device C, and the reception of this WLAN information by a further network device, in this case the LTE-U base station. Unlike the WLAN protocol the requesting device, in this case the mobile user equipment referred to as WLAN device C, uses the reserved resources for a transmission of data using LTE-U. In this case a coordination of the LTE-U interface with the WLAN transmission in the requesting device is of advantage. For instance the LTE-U module receives information from the WLAN module.

In case the requesting device is a mobile user equipment it can be controlled and be supplied with parameters and status reports over a connection, such as the licensed band air interface, by the LTE base station. Generally speaking, information may be exchanged between the LTE base station and the mobile user equipment via the licensed band air interface in both directions. Part of this information exchange may be an indication of success or failure of the RTS/CTS procedures or the negotiated time span of the allocation time slot.

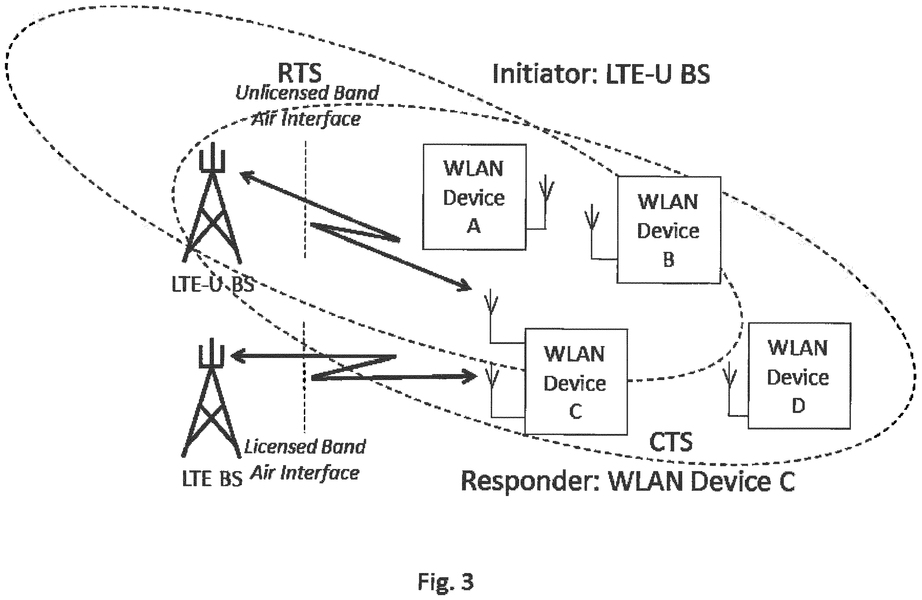

Figure 3 shows a telecommunication system for interference minimization in a wireless telecommunication network. In this case the LTE-U base station, requests the allocation of a time slot RTS according to the WLAN standard, which is also received and considered by all further WLAN devices. The receiving part of the RTS message, in this case the mobile user equipment being referred to as WLAN device C, responds according to the WLAN technology with a Clear-to-Send message CTS. This response message CTS is also received and respected by all neighboring WLAN stations. Hence, a period of time is defined which is reserved for the transmission of WLAN information by means of the requesting network device, in this case the LTE-U base station, and the reception of this WLAN information by a further network device, in this case the mobile user equipment referred to as WLAN device C. Unlike the WLAN protocol the requesting device, in this case the LTE-U base station, uses the reserved resources for a transmission of data using LTE-U. In this case a coordination of the LTE-U interface with the WLAN transmission in the requesting device is of advantage. For instance the LTE-U base station may receive information from the LTE base station or another device on the network side either in the Radio Access Network RAN or the Core Network CN of the mobile network. This information may comprise configuration information, control information and/or information regarding the determined or negotiated timespan.

In case the receiving device is a mobile user equipment it can be controlled and be supplied with parameters and status reports over a connection, such as the licensed band air interface, by the LTE base station. Generally speaking, information may be exchanged between the LTE base station and mobile user equipment via the licensed band air interface in both directions. Part of this information exchange may be an indication of success or failure of the RTS/CTS procedures or the negotiated time span of the allocation time slot.

The sending of the RTS message can be omitted. As the LTE-U base station holds information concerning the generated scheduling which is sent to the user equipment the LTE-U base station can directly sent the CTS message without sending the RTS message before. Hence, a novel approach is provided which does not require the RTS message. In general, in case of a joint allocation of resources and communicating the allocation of resources is accomplished by the same device or tightly coupled devices, omitting the sending of the RTS message is of advantage.

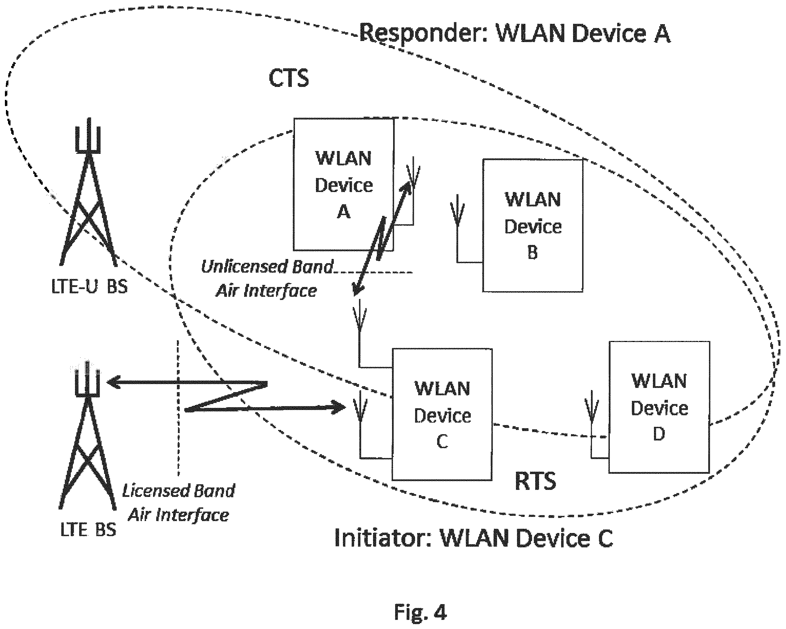

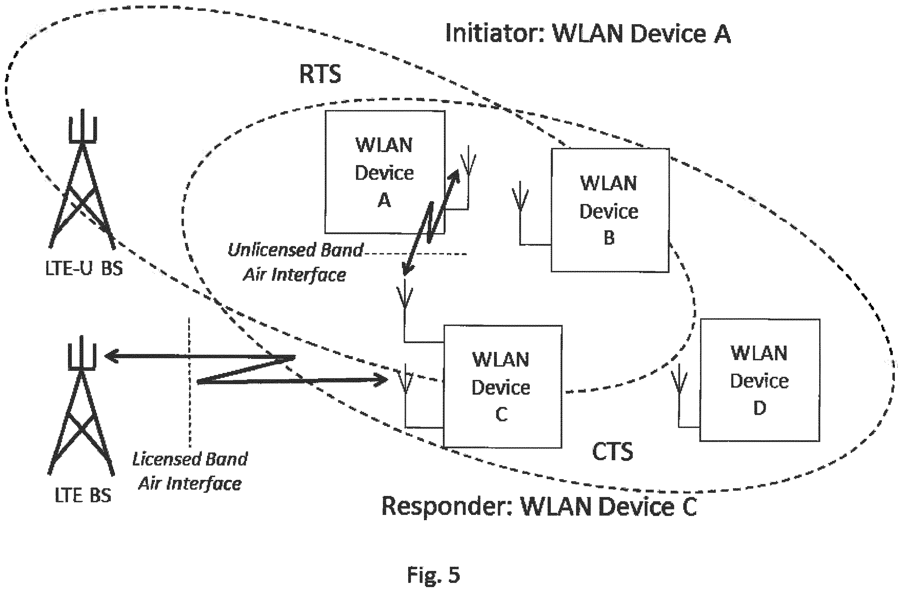

The aspects described so far for an infrastructure mode can as well be applied in a device-to-device scenario. This is shown by figures 4 and 5 respectively. Also in a device-to-device scenario the LTE base station can control the connection by the respective parameters as described above. Likewise, the mobile communication device(s) may transmit information regarding the outcome of the RTS/CTS procedure(s), such as the negotiated time span of the allocation time slot, to the LTE base station.

Figure 4 shows a telecommunication system for interference minimization in a wireless telecommunication network. A network device, in this case the user equipment being referred to as WLAN device C, requests the allocation of a time slot RTS according to the WLAN standard, which is also received and considered by all further WLAN devices. The receiving part of the RTS message, in this case the WLAN device A, responds according to the WLAN technology with a Clear-to-Send message CTS. This response message CTS is also received and respected by all neighboring WLAN stations. Hence, a period of time is defined which is reserved for the transmission of WLAN information by means of the requesting network device, in this case the user equipment being referred to as WLAN device C, and the reception of this WLAN information by a further network device, in this case the WLAN device A. Unlike the WLAN protocol the requesting device, in this case the user equipment being referred to as WLAN device C, uses the reserved resources for a transmission of data using LTE-U. In this case a coordination of the LTE-U interface with the WLAN transmission in the requesting device is of advantage. For instance the WLAN module hands over information to the LTE module, so that the LTE module can be configured appropriately.

Figure 5 shows a telecommunication system for interference minimization in a wireless telecommunication network. A network device, in this case the WLAN device A, requests the allocation of a time slot RTS according to the WLAN standard, which is also received and considered by all further WLAN devices. The receiving part of the RTS message, in this case the mobile user equipment being referred to as WLAN device C, responds according to the WLAN technology with a Clear-to-Send message CTS. This response message CTS is also received and respected by all neighboring WLAN stations. Hence, a period of time is defined which is reserved for the transmission of WLAN information by means of the requesting network device, in this case the WLAN device A, and the reception of this WLAN information by a further network device, in this case the mobile user equipment referred to as WLAN device C. Unlike the WLAN protocol the requesting device, in this case the WLAN device A, uses the reserved resources for a transmission of data using LTE-U. In this case a coordination of the LTE-U interface with the WLAN transmission in the requesting device is of advantage. For instance the WLAN module hands over information to the LTE module, so that the LTE module can be configured appropriately.

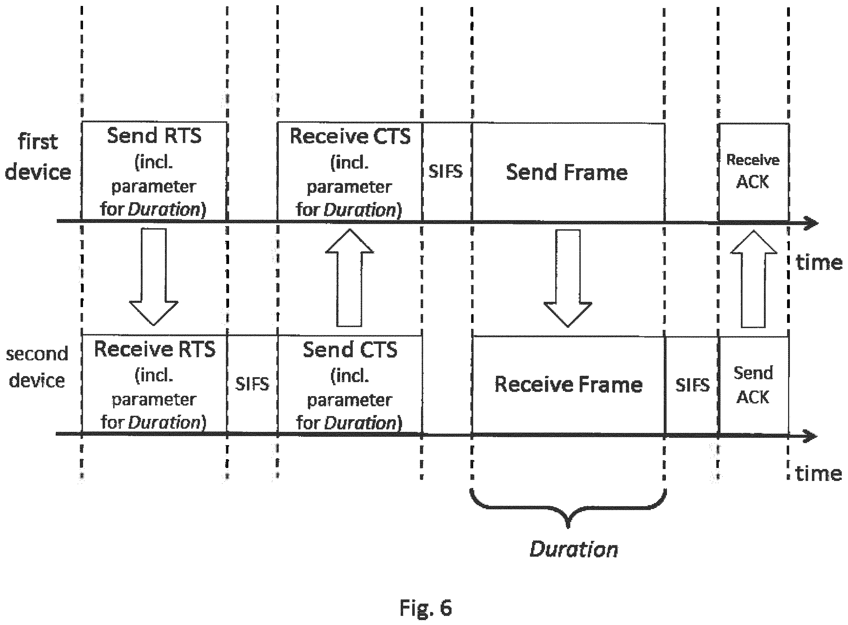

Figure 6 shows the temporal correlation between the RTS message, namely the reservation request, being sent from one network device to another, the CTS message, namely the response message, which is returned from the formally receiving device to the formally sending device, the reserved time slot, also referred to as "Send Frame", which is used for LTE-U and the terminating acknowledgement frame, also referred to as ACK. Figure 6 also depicts the so-called "short inter frame spaces" SIFS, being defined by the WLAN standard. They indicate the waiting period after the reception of a message and therefore indicate the waiting period for sending new frames.

In this figure the transmitting device is the "first device" and the allocating device is the "second device". Again, it is noteworthy to mention that the "second device" may have possibilities to overwrite/overrule the duration parameter (and possibly other parameters) received in the RTS from the "first device".

The LTE base station is arranged to signal to the mobile device the presumable data amount over a first permanent connection (e.g., a cellular connection using legacy LTE), wherein the data amount is to be sent over LTE-U. The value for the requested period of time "duration" is to be determined in the mobile device. Furthermore, it may be the case that the LTE base station informs the mobile device about the presumable value "duration" for the RTS request directly.

The LTE-U base station signals resources for the user equipment to be used in the uplink on the fly, which means during operation for a specific data transmission. This downlink signaling may comprise the timing/scheduling information. The user equipment is now informed about the resource situation and can estimate its resource requirements under consideration of the actual data load. Now the user equipment attempts to free resources of the WLAN system in the requested time slot by reserving the resources for the requested time slot for itself, according to the RTS/CTS WLAN standard. In case of a positive allocation the LTE-U transmission can be accomplished in the respective time slot, which leads to less interference issues arising from neighboring WLAN subscribers. In case the allocation fails the LTE-U resources can still be used, but a higher rate of interference might have to be taken into account and/or possibly with increased transmission power. The user equipment may also respect the existing neighboring WLAN systems in close proximity and send with decreased transmission power and adapting the modulation or the used redundancy encoding respectively. An LTE-U base station can also be equipped with a WLAN module (or with a modified LTE-U module being supportive of the RTS/CTS procedure) and can therefore be capable of detecting the reservation of a time slot according to the WLAN standard. In preparation of these method steps the user equipment and the LTE-U base station may have mutually registered their WLAN-MAC addresses, which couples the time slot to this very specific user equipment. Hence, the LTE-U base station recognizes that the channel is of less interference in the upcoming timeslot in case of a positive allocation.

The same procedure applies to the downlink for LTE-U. In this case the base station accomplishes the suggested method and their user equipment receives the reservation requests RTS and subsequently acknowledges the request by sending a CTS.

The base station may determine the properties of the data to be transmitted over LTE-U, for instance under consideration of data amounts, such as buffer status, quality of services, type of service, logical channel priority and the like or the direction of transmission for the resource allocation is signaled. For instance, the present base station may determine the type of traffic and/or service that is to be conveyed via LTE-U and instruct or configure the user equipment accordingly. In this case the signaling may comprise information indicating that the allocation is performed for sending data or for receiving data or with respect to the underlying infrastructure the signaling may indicate that allocation is performed for a direct communication between end devices, so-called device-to-device communication, ProSe.

Interference between different systems and transmission technologies transmitting in the unlicensed bands, such as WLAN and LTU, may be minimized. WLAN resource allocation may be used for another transmission technology, such as LTE-U. This is of advantage compared to an uncoordinated transmission of LTE-U in the unlicensed bands. The LTE base station can control the allocation of resources by means of the RTS/CTS procedure and analyze its results. The LTE base station can be informed about the results of the allocation attempts, for instance by forwarding the parameter "duration" taken from the CTS acknowledgement and can configure its scheduler accordingly.

## Claims

1. A radio communication device having a first communication module and a second communication module, the first communication module and the second communication module providing communication capability to the radio communication device according to a first radio access technology and according to a second radio access technology, wherein the first radio access technology is according to the IEEE 802.11 family of standards and the second radio access technology is according to the 3GPP unlicensed LTE standard,
wherein the radio communication device is adapted to receive a notification indicating that the device is entitled to transmit using an allocated transmission resource for the first radio access technology and to transmit using the allocated transmission resource but by means of the second radio access technology in place of the first radio access technology,
**characterized in that** the radio communication device is adapted to receive control information from a base station
operating according to at least one of the 3GPP LTE family of standards over a licensed band interface, the control information being used to control the transmission of data using the second radio access technology.

2. The radio communication device according to claim 1, wherein the notification is a Clear-to-Send CTS frame according to one of the IEEE 802.11 family of standards.

3. The radio communication device according to claim 1 or 2, wherein the notification is a Clear-to-Send, CTS, frame and the radio communication device is adapted to transmit a Request-to-Send, RTS, frame only after the reception of the CTS frame.

4. The radio communication device according to any of the preceding claims, wherein the allocated transmission resource comprises at least one of a time slot for transmission, a relative duration for transmission, a frequency band, a carrier frequency, an unlicensed frequency band, a carrier frequency in an unlicensed band, and a hardware resource.

5. The radio communication device according to any of the preceding claims, wherein the radio communication device is arranged such that a set of data to be transmitted is fragmented and a notification is received for each of the fragments to be transmitted.

6. The radio communication device according to claim 5, wherein the radio communication device is arranged to transmit a first set of fragments according to one of the LTE family of standards and to transmit a second set of fragments according to one of the IEEE 802.11 family of standards.

7. The radio communication device according to any of the preceding claims, wherein at least one of the communication modules is arranged to communicate according to at least one of the LTE family of standards and at least one of the IEEE 802.11 family of standards.

8. The radio communication device according to any of the preceding claims, wherein at least one of the communication modules comprises an LTE protocol stack being enhanced to support WLAN functionality.

9. The radio communication device according to any of the preceding claims, wherein at least one module is arranged to transmit on an unlicensed frequency band in case a traffic threshold of a transmission on a licensed band is exceeded.

10. The radio communication device according to any of the preceding claims, being arranged to negotiate a transmission resource to be allocated with one of a base station, an access point, a router, a mobile terminal, a user equipment and a further radio communication device.

11. The radio communication device according to any of the preceding claims, wherein the notification comprises at least one of a group of notification parameters, the group comprising a duration, a radio communication device identifier, a priority, a time slot for transmission, a relative duration for transmission, a frequency band, a carrier frequency, an unlicensed frequency band, a carrier frequency in an unlicensed band, and a hardware resource.

12. A method performed by a radio communication device having a first communication module and a second communication module, the first communication module and the second communication module providing communication capability to the radio communication device according to a first radio access technology and according to a second radio access technology, wherein the first radio access technology is according to the IEEE 802.11 family of standards and the second access technology is according to the 3GPP unlicensed LTE standard, the method comprising the steps of:
receiving a notification indicating that the device is entitled to transmit using an allocated transmission resource for the first radio access technology; and
transmitting using the allocated transmission resource but by means of the second radio access technology in place of the first radio access technology,
**characterized in that** the method further comprises receiving control information from a base station operating according to at least one of the 3GPP LTE family of standards over a licensed band interface, the control information being used to control the transmission of data using the second radio access technology.

13. The method according to claim 12 wherein the notification is a Clear-to-Send, CTS, frame according to one of the IEEE 802.11 family of standards.

## Patentansprüche

1. Funkkommunikationsvorrichtung, aufweisend ein erstes Kommunikationsmodul und ein zweites Kommunikationsmodul, wobei das erste Kommunikationsmodul und das zweite Kommunikationsmodul der Funkkommunikationsvorrichtung gemäß einer ersten Funkzugangstechnologie und gemäß einer zweiten Funkzugangstechnologie Kommunikationsfähigkeit bereitstellen, wobei die erste Funkzugangstechnologie der Normenfamilie IEEE 802.11 und die zweite Funkzugangstechnologie dem 3GPP-Standard für LTE im unlizenzierten Spektrum entspricht,
wobei die Funkkommunikationsvorrichtung angepasst ist, eine Benachrichtigung zu empfangen, die angibt, dass die Vorrichtung berechtigt ist, unter Verwendung einer zugeordneten Übertragungsressource für die erste Funkzugangstechnologie zu übertragen und unter Verwendung der zugeordneten Übertragungsressource, aber mit Hilfe der zweiten Funkzugangstechnologie anstelle der ersten Funkzugangstechnologie zu übertragen,
**dadurch gekennzeichnet, dass** die Funkkommunikationsvorrichtung angepasst ist, Steuerinformationen von einer Basisstation, die nach mindestens einer der Normenfamilie 3GPP LTE arbeitet, über eine Schnittstelle im lizenzierten Spektrum zu empfangen, wobei die Steuerinformationen verwendet werden, um die Datenübertragung unter Verwendung der zweiten Funkzugangstechnologie zu steuern.

2. Funkkommunikationsvorrichtung nach Anspruch 1, wobei die Benachrichtigung ein Clear-to-Send, CTS -, Frame nach einer der Normenfamilie IEEE 802.11 ist.

3. Funkkommunikationsvorrichtung nach Anspruch 1 oder 2, wobei die Benachrichtigung ein Clear-to-Send, CTS-, Frame ist und die Funkkommunikationsvorrichtung angepasst ist, einen Request-to-Send, RTS-, Frame erst nach Empfang des CTS-Frames zu übertragen.

4. Funkkommunikationsvorrichtung nach einem der vorstehenden Ansprüche, wobei die zugeordnete Übertragungsressource mindestens eines von einem Zeitschlitz zur Übertragung, einer relativen Dauer zur Übertragung, einem Frequenzband, einer Trägerfrequenz, einem nicht lizenziertem Frequenzband, einer Trägerfrequenz in einem nicht lizenzierten Band und einer Hardware-Ressource umfasst.

5. Funkkommunikationsvorrichtung nach einem der vorstehenden Ansprüche, wobei die Funkkommunikationsvorrichtung so angeordnet ist, dass ein zu übertragender Datensatz fragmentiert wird und eine Benachrichtigung für jedes der zu übertragenden Fragmente empfangen wird.

6. Funkkommunikationsvorrichtung nach Anspruch 5, wobei die Funkkommunikationsvorrichtung angeordnet ist, einen ersten Satz von Fragmenten nach einer der LTE Familie von Normen zu übertragen und einen zweiten Satz von Fragmenten nach einer der Normenfamilie IEEE 802.11 zu übertragen.

7. Funkkommunikationsvorrichtung nach einem der vorstehenden Ansprüche, wobei mindestens eines der Kommunikationsmodule angeordnet ist, nach mindestens einer der LTE Familie von Normen und mindestens einer der Normenfamilie IEEE 802.11 zu kommunizieren.

8. Funkkommunikationsvorrichtung nach einem der vorstehenden Ansprüche, wobei mindestens eines der Kommunikationsmodule einen LTE-Protokollstapel umfasst, der verstärkt ist, um WLAN-Funktionalität zu unterstützen.

9. Funkkommunikationsvorrichtung nach einem der vorstehenden Ansprüche, wobei mindestens ein Modul angeordnet ist, auf einem nicht lizenzierten Frequenzband zu übertragen, falls eine Verkehrsschwelle einer Übertragung auf einem lizenzierten Band überschritten wird.

10. Funkkommunikationsvorrichtung nach einem der vorstehenden Ansprüche, die angeordnet ist, eine Übertragungsressource, die zuzuordnen ist, mit einem von einer Basisstation, einem Zugangspunkt, einem Router, einem mobilen Endgerät, einem Benutzergerät und einer weiteren Funkkommunikationsvorrichtung zu verhandeln.

11. Funkkommunikationsvorrichtung nach einem der vorstehenden Ansprüche, wobei die Benachrichtigung mindestens einen aus einer Gruppe von Benachrichtigungsparametern umfasst, wobei die Gruppe eine Dauer, eine Funkkommunikationsvorrichtungskennung, eine Priorität, einen Zeitschlitz zur Übertragung, eine relative Dauer zur Übertragung, ein Frequenzband, eine Trägerfrequenz, ein nicht lizenziertes Frequenzband, eine Trägerfrequenz in einem nicht lizenzierten Band und eine Hardware-Ressource umfasst.

12. Verfahren, das von einer Funkkommunikationsvorrichtung, aufweisend ein erstes Kommunikationsmodul und ein zweites Kommunikationsmodul, durchgeführt wird, wobei das erste Kommunikationsmodul und das zweite Kommunikationsmodul der Funkkommunikationsvorrichtung gemäß einer ersten Funkzugangstechnologie und gemäß einer zweiten Funkzugangstechnologie Kommunikationsfähigkeit bereitstellen, wobei die erste Funkzugangstechnologie der Normenfamilie IEEE 802.11 und die zweite Funkzugangstechnologie dem 3GPP-Standard für LTE im unlizenzierten Spektrum entspricht, wobei das Verfahren folgende Schritte umfasst:
Empfangen einer Benachrichtigung, die angibt, dass die Vorrichtung berechtigt ist, unter Verwendung einer zugeordneten Übertragungsressource für die erste Funkzugangstechnologie zu übertragen; und
Übertragen, unter Verwendung der zugeordneten Übertragungsressource, aber mit Hilfe der zweiten Funkzugangstechnologie anstelle der ersten Funkzugangstechnologie,
**dadurch gekennzeichnet, dass** das Verfahren weiter Empfangen von Steuerinformationen von einer Basisstation, die nach mindestens einer der Normenfamilie 3GPP LTE arbeitet, über eine Schnittstelle im lizenzierten Spektrum umfasst, wobei die Steuerinformationen verwendet werden, um die Datenübertragung unter Verwendung der zweiten Funkzugangstechnologie zu steuern.

13. Verfahren nach Anspruch 12, wobei die Benachrichtigung ein Clear-to-Send, CTS-, Frame nach einer der Normenfamilie IEEE 802.11 ist.

## Revendications

1. Dispositif de communication radio présentant un premier module de communication et un second module de communication, le premier module de communication et le second module de communication fournissant une capacité de communication au dispositif de communication radio conformément à une première technologie d'accès radio et conformément à une seconde technologie d'accès radio, dans lequel la première technologie d'accès radio est conforme à la série des normes IEEE 802.11 et la seconde technologie d'accès radio est conforme à la norme 3GPP LTE dans une bande sans licence,
dans lequel le dispositif de communication radio est conçu pour recevoir une notification indiquant que le dispositif est autorisé à transmettre en utilisant une ressource de transmission attribuée pour la première technologie d'accès radio et à transmettre en utilisant la ressource de transmission attribuée mais au moyen de la seconde technologie d'accès radio à la place de la première technologie d'accès radio,
**caractérisé en ce que** le dispositif de communication radio est conçu pour recevoir des informations de commande en provenance d'une station de base fonctionnant conformément à au moins l'une de la série des normes 3GPP LTE sur une interface de bande sous licence, les informations de commande étant utilisées pour commander la transmission de données en utilisant la seconde technologie d'accès radio.

2. Dispositif de communication radio selon la revendication 1, dans lequel la notification est une trame prête à émettre CTS conformément à l'une de la série des normes IEEE 802.11.

3. Dispositif de communication radio selon la revendication 1 ou 2, dans lequel la notification est une trame prête à émettre, CTS, et le dispositif de communication radio est conçu pour ne transmettre une trame de demande d'émission, RTS, qu'après la réception de la trame CTS.

4. Dispositif de communication radio selon l'une quelconque des revendications précédentes, dans lequel la ressource de transmission attribuée comprend au moins un parmi un intervalle de temps pour la transmission, une durée relative pour la transmission, une bande de fréquences, une fréquence porteuse, une bande de fréquences sans licence, une fréquence porteuse dans une bande sans licence et une ressource matérielle.

5. Dispositif de communication radio selon l'une quelconque des revendications précédentes, dans lequel le dispositif de communication radio est agencé de sorte qu'un ensemble de données à transmettre soit fragmenté et qu'une notification soit reçue pour chacun des fragments à transmettre.

6. Dispositif de communication radio selon la revendication 5, dans lequel le dispositif de communication radio est agencé pour transmettre un premier ensemble de fragments conformément à l'une de la série des normes LTE et pour transmettre un second ensemble de fragments conformément à l'une de la série des normes IEEE 802.11.

7. Dispositif de communication radio selon l'une quelconque des revendications précédentes, dans lequel au moins l'un des modules de communication est agencé pour communiquer conformément à au moins l'une de la série des normes LTE et au moins l'une de la série des normes IEEE 802.11.

8. Dispositif de communication radio selon l'une quelconque des revendications précédentes, dans lequel au moins l'un des modules de communication comprend une pile de protocoles LTE étant améliorée pour prendre en charge une fonctionnalité WLAN.

9. Dispositif de communication radio selon l'une quelconque des revendications précédentes, dans lequel au moins un module est agencé pour transmettre sur une bande de fréquences sans licence dans un cas où un seuil de trafic d'une transmission sur une bande sous licence est dépassé.

10. Dispositif de communication radio selon l'une quelconque des revendications précédentes, étant agencé pour négocier une ressource de transmission à attribuer avec un parmi une station de base, un point d'accès, un routeur, un terminal mobile, un équipement utilisateur et un autre dispositif de communication radio.

11. Dispositif de communication radio selon l'une quelconque des revendications précédentes, dans lequel la notification comprend au moins un parmi un groupe de paramètres de notification, le groupe comprenant une durée, un identifiant de dispositif de communication radio, une priorité, un intervalle de temps pour la transmission, une durée relative pour la transmission, une bande de fréquences, une fréquence porteuse, une bande de fréquences sans licence, une fréquence porteuse dans une bande sans licence et une ressource matérielle.

12. Procédé réalisé par un dispositif de communication radio présentant un premier module de communication et un second module de communication, le premier module de communication et le second module de communication fournissant une capacité de communication au dispositif de communication radio conformément à une première technologie d'accès radio et conformément à une seconde technologie d'accès radio, dans lequel la première technologie d'accès radio est conforme à la série des normes IEEE 802.11 et la seconde technologie d'accès est conforme à la norme 3GPP LTE dans une bande sans licence, le procédé comprenant les étapes de :
réception d'une notification indiquant que le dispositif est autorisé à transmettre en utilisant une ressource de transmission attribuée pour la première technologie d'accès radio ; et
transmission en utilisant la ressource de transmission attribuée mais au moyen de la seconde technologie d'accès radio à la place de la première technologie d'accès radio,
**caractérisé en ce que** le procédé comprend en outre la réception d'informations de commande en provenance d'une station de base fonctionnant conformément à au moins l'une de la série des normes 3GPP LTE sur une interface de bande sous licence, les informations de commande étant utilisées pour commander la transmission de données en utilisant la seconde technologie d'accès radio.

13. Procédé selon la revendication 12, dans lequel la notification est une trame prête à émettre, CTS, conformément à l'une de la série des normes IEEE 802.11.
